# EUROPEAN PATENT APPLICATION

(11) **EP 2 762 685 A1**
(43) Date of publication of application: **06.08.2014**
(21) Application number: 14153182.2
(22) Date of filing: 30.01.2014
(51) Int. Cl.: F01D 9/06, F02C 7/14

(54) **Gas turbine engine integrated heat exchanger**

(30) Priority: 30.01.2013 US 201313753678
(71) Applicant: General Electric Company, Schenectady, New York 12345 (US)
(72) Inventor: Freund, Sebastian, Niskayuna, NY New York 12309 (US); Antel, Jr., William Joseph, Niskayuna, NY New York 12309 (US); Alejandro Carretero, Benignos Jorge, Niskayuna, NY New York 12309 (US)
(74) Representative: Williams, Andrew Richard

(57) **Abstract**

A heat exchanger apparatus (54,82) including at least one cooling channel (76,84) formed within and about an engine booster lip (74) or an engine nacelle and configured to receive a flow of a circulating working fluid; and at least one fluid port (90) communicating with the at least one cooling channel (76,84) and an exterior of the engine booster lip or the engine nacelle.

## Description

### BACKGROUND

This invention relates generally to turbomachines, and more particularly to the design of an enhanced heat exchanger, in the form of an air-cooled surface cooler, for use in turbomachines.

Modem turbofan/turbojet engines have an ever-increasing demand of cooling, including gearbox oil, cooling air and electronics, while at the same time their efficiency has to be pushed ever higher. Currently air-cooled oil coolers are usually plate-fin type "brick" heat exchangers that are mounted within the bypass channel to receive flow from the engine intake or bypass stream or from a separate air-intake in the nacelle or fan casing. New designs have mitigated the high drag of this design due to the plate-fin exchanger sitting in the bypass channel by utilizing a surface cooler that is mounted flush with the aft fan cowling. However, the space in this region of the engine is limited and current designs utilize nearly all the available space. As a result, newer engine technologies, which have more heat that must be dissipated, will be thermally constrained due to the lack of space available onto which the cooler may be formed. In addition, current heat exchangers such as these plate-fin "brick" coolers obstruct the air flow and incur aerodynamic losses as the cooling requirements grow. These losses mean increased specific fuel consumption.

By using a surface cooler where only the cooler fins project into the engine air bypass flow, the drag of the oil cooler heat exchanger has been reduced over that of a traditional plate-fin cooler. However increasing heat loads requires that the surface cooler will need to be larger in size. Aircraft weight is a current concern in the current industry, with a decrease in aircraft weight resulting in an efficiency increase. In addition, new engines are becoming space constrained, making the size and weight of these types of plate-fin coolers prohibitive.

Prior attempts to overcome this problem have utilized a coil of tubing within the outlet guide vane/strut and in thermal contact with the surface of the strut. As oil is flowed through the tubing heat is transferred to the bypass air stream through the strut skin. In addition, systems that utilize various air scoops in the fan bypass flow, thereby directing air through a plate-fin heat exchanger have been utilized, as well as the use of actuators to push the plate-fin heat exchange in and out of the fan bypass flow or alternatively block part of the air scoop. By modulating the amount of air utilized by the heat exchanger only the minimal amount of airflow required is utilized. While resulting in the cooling of oil, as well as additional aircraft components, these systems may be thermally limited, cost prohibitive to fabricate and implement an increase drag on the aircraft.

In an attempt to increase efficiency of these known surface coolers, there is a desire for an improved air cooled oil cooler that will enable the cooler to be implemented into newer engine technologies with increased heat dissipation requirements, while remaining cost effective and having minimal aerodynamic drag as compared to current designs, and therefore provide an overall more efficient system.

### BRIEF SUMMARY

These and other shortcomings of the prior art are addressed by the present disclosure, which provides a heat exchanger apparatus.

In accordance with an embodiment, provided is a heat exchanger apparatus including at least one cooling channel formed within and about an engine booster lip or an engine annular fan casing and configured to receive a flow of a circulating working fluid; and at least one fluid port communicating with the at least one cooling channel and an exterior of the engine booster lip or the engine annular fan casing.

In accordance with another embodiment, provided is a heat exchanger apparatus including a plurality of cooling channels integrally formed within and about at least a portion of a circumference of one of an engine booster lip or an engine nacelle and wherein each of the plurality of cooling channels is configured to receive a flow of circulating working fluid; and inlet and outlet ports communicating with the at least one cooling channel and an exterior of the engine booster lip or the engine nacelle.

In accordance with yet another embodiment, provided is and engine including a core engine; and a heat exchanger apparatus. The heat exchanger apparatus including at least one cooling channel integrally formed within and about an engine booster lip or an engine annular fan casing and configured to receive a flow of a circulating working fluid; and at least one fluid port communicating with the at least one flush mounted cooling channel and an exterior of the engine booster lip or the engine annular fan casing. The at least one cooling channel is configured to provide an increase in the heat transfer coefficient of the heat exchanger apparatus while minimizing aerodynamic losses and specific fuel consumption (SFC).

Other objects and advantages of the present disclosure will become apparent upon reading the following detailed description and the appended claims with reference to the accompanying drawings.

### BRIEF DESCRIPTION OF THE FIGURES

The above and other features, aspects, and advantages of the present disclosure will become better understood when the following detailed description is read with reference to the accompanying drawings in which like characters represent like parts throughout the drawings, wherein:
FIG. 1 is a schematic cross-sectional view of a gas turbine engine incorporating a heat exchanger system constructed according to an aspect of the present disclosure;
FIG. 2 is an enlarged view of a portion of the gas turbine engine of FIG. 1;
FIG. 3 is a side view of an outlet guide vane and a portion of a booster lip in contact with a root of the outlet guide vane constructed in accordance with an aspect of the present disclosure;
FIG. 4 is a perspective view of a portion of the gas turbine engine of FIG. 1 illustrating the booster lip and associated outlet guide vanes;
FIG. 5 a schematic cross-sectional view of a gas turbine engine incorporating a heat exchanger system constructed according to another aspect of the present disclosure;
FIG. 6 is an enlarged view of a portion of the gas turbine engine of FIG. 5; and
FIG. 7 is a perspective view of an exterior of the gas turbine engine of FIG. 5.

### DETAILED DESCRIPTION

The invention will be described for the purposes of illustration only in connection with certain embodiments; however, it is to be understood that other objects and advantages of the present disclosure will be made apparent by the following description of the drawings according to the disclosure. While preferred embodiments are disclosed, they are not intended to be limiting. Rather, the general principles set forth herein are considered to be merely illustrative of the scope of the present disclosure and it is to be further understood that numerous changes may be made without straying from the scope of the present disclosure.

Embodiments disclosed herein relate to heat exchangers and more particularly to enhanced heat exchangers for use in an engine such as an aircraft engine. The exemplary heat exchangers may be used for providing efficient cooling. Further, the term "heat exchangers" as used herein may be used interchangeably with the term "surface coolers". As used herein, the heat exchangers/surface coolers are applicable to various types of turbomachinery applications such as, but not limited to, turbojets, turbo fans, turbo propulsion engines, aircraft engines, gas turbines, steam turbines, wind turbines, and water turbines.

Preferred embodiments of the present disclosure are illustrated in the figures with like numerals being used to refer to like and corresponding parts of the various drawings. It is also understood that terms such as "top", "bottom", "outward", "inward", and the like are words of convenience and are not to be construed as limiting terms. It is to be noted that the terms "first," "second," and the like, as used herein do not denote any order, quantity, or importance, but rather are used to distinguish one element from another. The terms "a" and "an" do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity).

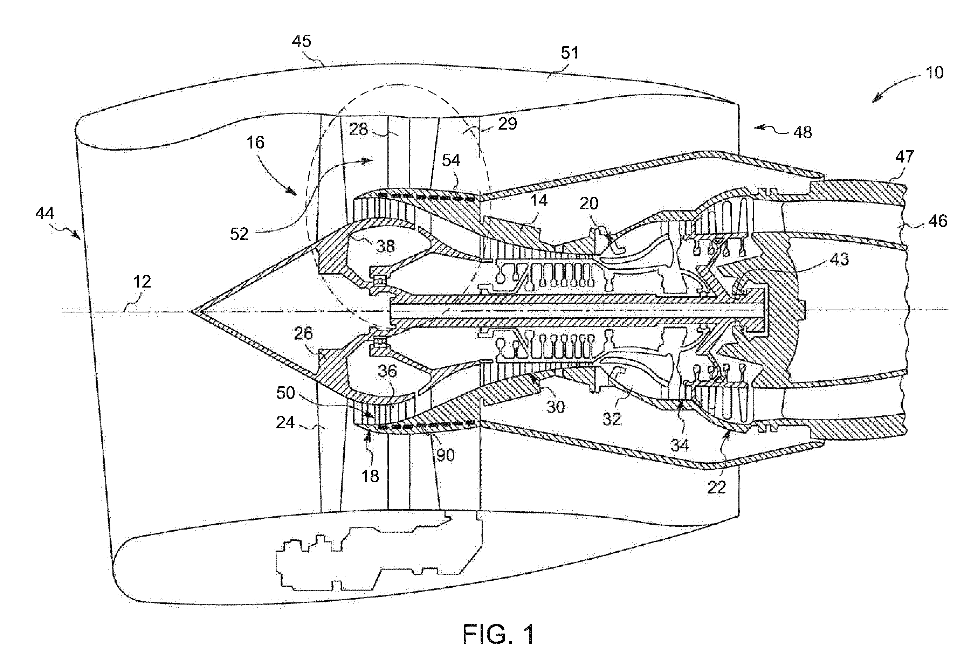

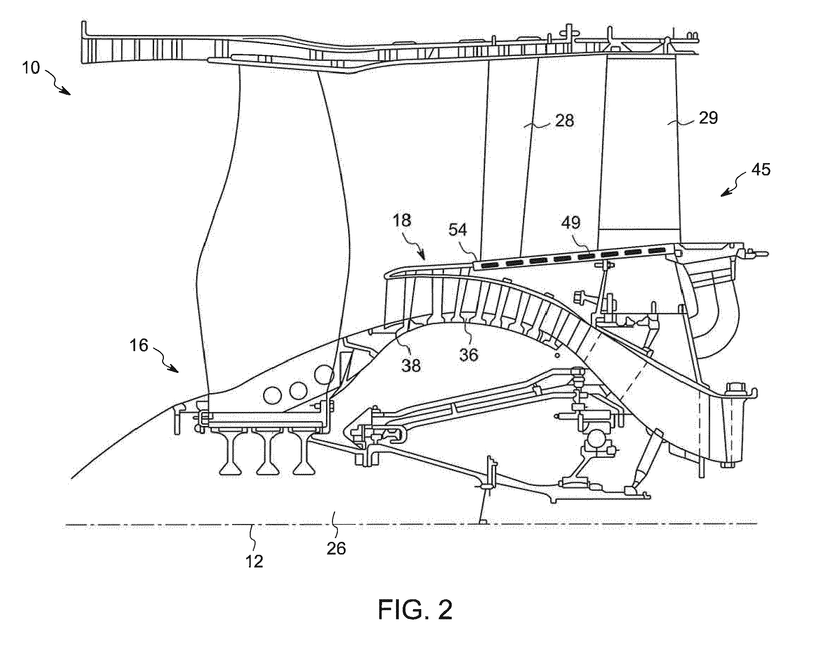

Referring to the drawings wherein identical reference numerals denote the same elements throughout the various views, FIGs. 1 and 2 depict schematic illustrations of an exemplary aircraft engine assembly 10 in accordance with the present disclosure. It is noted that the portion of the engine assembly 10 illustrated in FIG. 2 is indicated by dotted line in FIG. 1. The engine assembly 10 has a longitudinal center line or axis 12 and an outer stationary annular casing 14 disposed concentrically about and coaxially along the axis 12. In the exemplary embodiment, the engine assembly 10 includes a fan assembly 16, a booster compressor 18, a core gas turbine engine 20, and a low-pressure turbine 22 that may be coupled to the fan assembly 16 and the booster compressor 18. The fan assembly 16 includes a plurality of rotor fan blades 24 that extend substantially radially outward from a fan rotor disk 26, as well as a plurality of structural strut members 28 and outlet guide vanes ("OGVs") 29 that may be positioned downstream of the rotor fan blades 24. In this example, separate members are provided for the aerodynamic and structural functions. In other configurations, each of the OGVs 29 may be both an aero-turning element and a structural support for an annular fan casing (described presently). While the concepts of the present disclosure will be described using the outlet guide vane 29 as an example of a portion of the heat exchanger apparatus, it will be understood that those concepts are applicable to any aero-turning or stationary airfoil-type structure within the engine assembly 10.

The core gas turbine engine 20 includes a high-pressure compressor 30, a combustor 32, and a high-pressure turbine 34. The booster compressor 18 includes a plurality of rotor blades 36 that extend substantially radially outward from a compressor rotor disk 38 coupled to a first drive shaft 40. The high-pressure compressor 30 and the high-pressure turbine 34 are coupled together by a second drive shaft 42. The first and second drive shafts 40 and 42 are rotatably mounted in bearings 43 which are themselves mounted in a fan frame 45 and a turbine rear frame 47. The fan frame 45 has a central hub 49 connected to the annular fan casing 51. The engine assembly 10 also includes an intake side 44, a core engine exhaust side 46, and a fan exhaust side 48.

During operation, the fan assembly 14 compresses air entering the engine assembly 10 through the intake side 44. The airflow exiting the fan assembly 14 is split such that a portion 50 of the airflow is channeled into the booster compressor 18, as compressed airflow, and a remaining portion 52 of the airflow bypasses the booster compressor 18 and the core gas turbine engine 20 and exits the engine assembly 10 through the fan exhaust side 48 as bypass air. This bypass air portion 52 flows past and interacts with the structural strut members 28 and the outlet guide vanes 29 creating unsteady pressures on the stator surfaces as well as in the surrounding airflow that radiate as acoustic waves. The plurality of rotor blades 24 compress and deliver the compressed airflow 50 towards the core gas turbine engine 20. Furthermore, the airflow 50 is further compressed by the high-pressure compressor 30 and is delivered to the combustor 32. Moreover, the compressed airflow 50 from the combustor 32 drives the rotating high-pressure turbine 34 and the low-pressure turbine 22 and exits the engine assembly 10 through the core engine exhaust side 46.

As previously noted, in certain presently available commercial engines heat exchangers are employed. Furthermore, high heat loads may lead to sub-optimal performance of certain heat exchangers. In accordance with exemplary aspects of the present technique, an apparatus 54 configured to function as a heat exchanger is presented. More particularly, the exemplary apparatus 54 may be configured to address the heat exchange requirements of a turbomachine such as an aircraft engine, for example. Hereinafter, the term "heat exchanger" may be used to refer to the apparatus 54 configured to facilitate cooling of the turbomachine.

In an embodiment, the booster compressor 18 and some or all of the structural fan outlet struts 28 in the engine assembly 10 comprise a portion of a heat exchanger integrated into their structures. In another embodiment, the booster compressor 18 and some or all of the OGVs 29 in the engine assembly 10 comprise a portion of a heat exchanger integrated into their structures. In yet another embodiment, the booster compressor 18 and some or all of the structural fan outlet struts 28 and the OGVs 29 in the engine assembly 10 comprise a portion of a heat exchanger integrated into their structures.

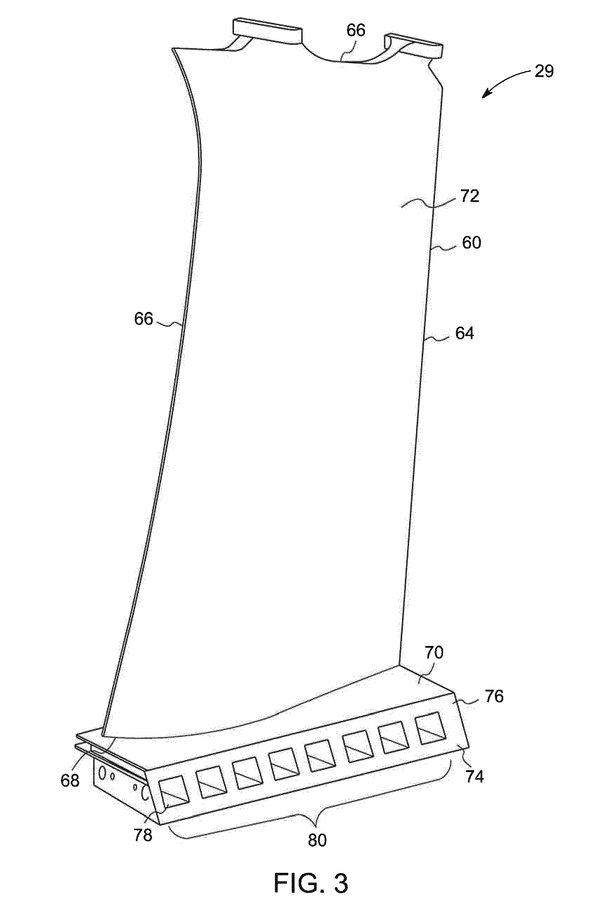

Referring now to FIG. 3, illustrated is one of the OGVs 29 of the engine assembly 10, illustrated in more detail. In general, the OGV 29 comprises an airfoil 60 having a leading edge 62, a trailing edge 64, a tip 66 and a root 68. An arcuate inner platform 70 is disposed at the root 68 of the airfoil 60.

The airfoil 60 is assembled from a body (not shown) and a cover 72. The body and the cover 72 are both made from a material with suitable strength and weight characteristics for the intended application. In addition, illustrated in FIG. 3 is an interior wall 74 of a booster lip 76 of the booster compressor 18, illustrating at least one cooling channel 78 integrally formed within and about the engine booster lip 76 and in contact with the root 68 of the OGVs 29. In an embodiment, the booster lip 76 includes a plurality of cooling channels 78 formed therein.

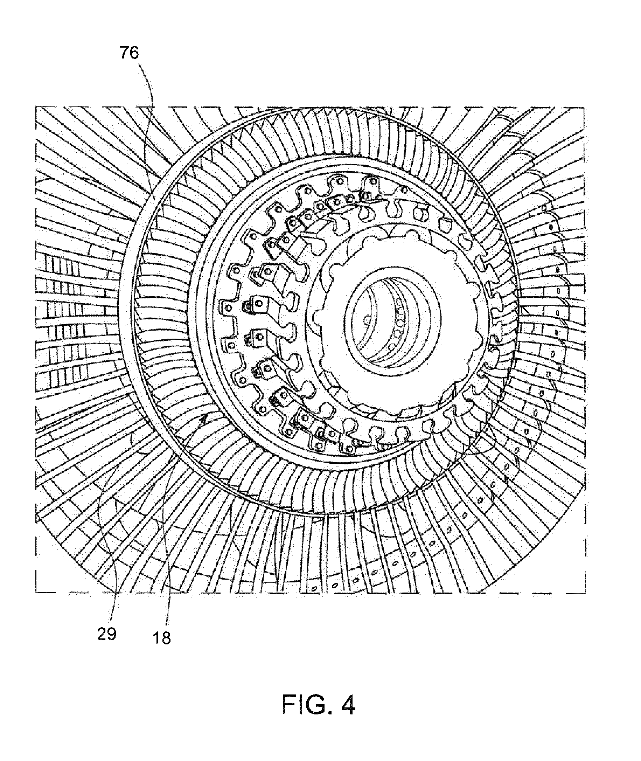

Referring specifically to FIG. 4, at least one cooling channel 78 provides a space within the booster lip 76 for a flow of working fluid, for example lubrication oil. In an embodiment, the at least one cooling channel 78 is integral to the booster lip, or in other words, the at least one cooling channel 78 is defined by the structure of the booster lip 76 itself, rather than any intermediate structure, such as filler materials. In an alternate embodiment, the at least one cooling channel 78 is defined by extruded channels, tubes, or piping that are embedded within the structure of the booster lip 76.

In operation, the working fluid is in intimate contact with the root 68 of the OGV 29 via the at least one cooling channel 78. This results in the airfoil 60 of the OGV 29 acting as a cooling fin for the working fluid in the at least one cooling channel 78 on the booster compressor circumference, maximizing the heat transfer rate. The interior of the at least one cooling channel 78, i.e. its size, shape, surface texture, and arrangement of internal walls or other features, may be configured to maximize heat transfer between the working fluid and the OGV 29, minimize pressure loses, and so forth. As used herein the term "channel" refers to the entire volume available for flow of working fluid within the booster lip 76, regardless of whether it is configured as a single cooling channel or a plurality of cooling channels.

As shown in FIGs. 3 and 4, the at least one cooling channel 78 is configured as a plurality of parallel channels 79 running in a generally radial (i.e. spanwise) direction and separated by walls or ribs. In an embodiment, the channels 79 are arranged into "groups" 80, an eight-channel group arrangement being shown, providing working fluid communication with a single OGV 29. Cross-passages (not shown) may interconnect the groups 80 to define a continuous flow path circumferentially about the booster compressor 18, and more particularly the booster lip 76. In an embodiment, the cross-passages are configured to provide for a flow of the working fluid about at least a portion of the circumference of the booster lip 76. In another embodiment, the cross-passages are configured to provide for a flow of the working fluid about a complete circumference of the booster lip 76. The at least one cooling channel 78 may be formed, for example, by a machining process. In the illustrated example, the width of each of the plurality of parallel channels 79 is approximately 6.4 mm (0.25 in.).

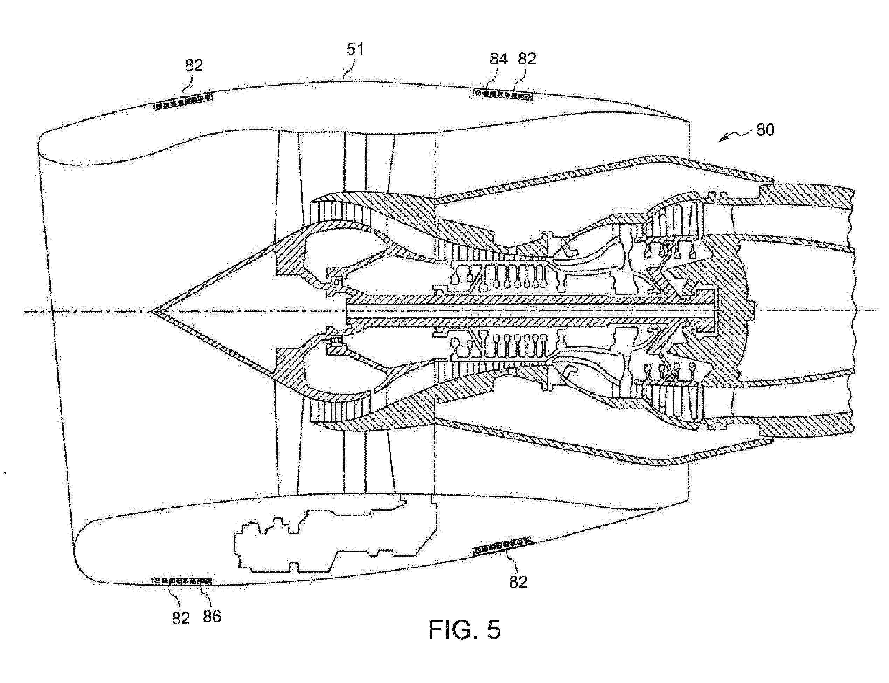

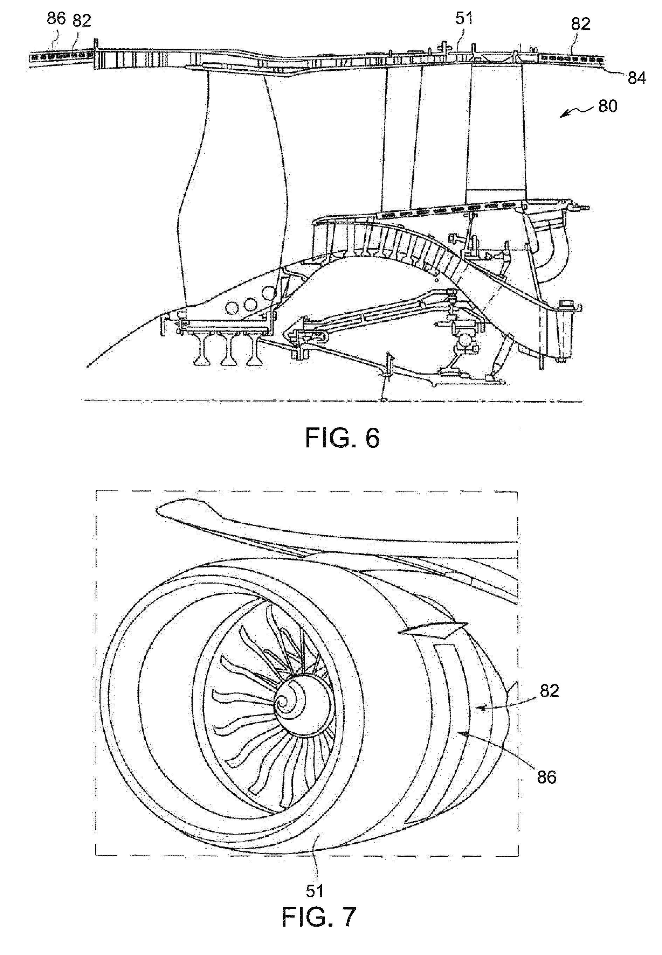

Referring now to FIGs. 5-7, illustrated is another embodiment of an engine assembly including a heat exchanger apparatus according to this disclosure. FIGs. 5 and 6 depict schematic illustrations of an exemplary aircraft engine assembly 80, generally similar to aircraft engine assembly 10 of FIGs. 1-2, in accordance with the present disclosure.

As previously noted, in certain presently available commercial engines heat exchangers are employed. In accordance with exemplary aspects of the present technique, an apparatus 82 configured to function as a heat exchanger is presented. More particularly, the apparatus 82 may be configured to address the heat exchange requirements of a turbomachine such as an aircraft engine, for example. Hereinafter, the term "heat exchanger" may be used to refer to the apparatus 82 configured to facilitate cooling of the turbomachine. In the embodiment illustrated in FIGs. 5-7, the heat exchanger apparatus 82 may be comprised of at least one cooling channel 84 disposed within and about an engine nacelle, also referred to herein interchangeably as the annular fan casing, 51 and configured to receive a flow of a circulating working fluid therein.

In the embodiment illustrated in FIGs. 5-7, a plurality of cooling channels 84 are formed at least partially about a circumference of the annular fan casing 51 and in thermal contact with a thermal plate 86 on the annular fan casing 51. In an embodiment, the thermal plate 86 is comprised of any metal or composite material capable of conducting heat. The plurality of channels 84 are configured to aid in cooling a working fluid that may be heated by various parts of the engine assembly 80. As will be appreciated, the working fluid may be heated by parts of the engine assembly 80 such as bearings. The heated fluid is channeled through the heat exchanger 82 via the plurality of channels 84. The heat from the fluid may be transferred from the walls of the plurality of channels 84 and dissipated into the thermal plate 86 and surrounding ambient air surrounding the annular fan casing 51, or nacelle structure. In an embodiment, this fluid may then be carried back to the parts in engine assembly 80.

FIG. 7 illustrates a perspective view of a portion of the exemplary heat exchanger apparatus 82 with the thermal plate 86 on an outer surface of the annular fan casing 51. In an embodiment, the thermal plate 86 may be integrally formed, or mounted flush to the annular fan casing 51 so as to provide minimal to no effect on the engine aerodynamics. In the illustrated embodiment, the heat exchanger 82 operates without the need for a fin structures, relying on movement of the airflow over the engine fan casing 51, and thus the thermal plate 86, to provide dissipation of the heat. At high altitudes, the heat exchanger 82 operates extremely efficiently due to the large temperature differential between the working fluid and the ambient air passing over the engine fan casing 51.

In operation, hot working fluid from the engine (e.g. lubricating oil or accessory cooling oil) is ported via at least one inlet and outlet port 90 (FIG. 1) communicating with the at least one cooling channel 78, 84 and an exterior of the engine booster lip 76 or the annular fan casing 51. The working fluid flows through the at least one cooling channel 78, 84 where heat is removed from the fluid by transfer to the airflow surrounding the OGV (in this case fan bypass flow) 29 (FIG. 1) or the engine fan casing 51 (FIG. 5). The heated oil then passes back to the remainder of the oil system. It will be understood that the oil system incorporates pumps, filters, lines, valves, tanks, and other equipment as needed to provide a flow of pressurized oil. Such components are well-known and therefore not illustrated here.

Using the concepts described herein, existing turbine engine structures, such as the booster compressor in combination with the OGVs or structural struts, or an engine fan casing may incorporate an oil cooling function, in addition to aero-turning and/or structural functions. The oil cooling function is performed utilizing exiting engine structures, without the need for the addition of a traditional plate-and-fin heat exchanger.

This concept has several advantages. Among them are minimal aerodynamic losses, as well as providing an increase in volume flow and propulsion power by permitting any heat that is added to the bypass flow after the fan, to be retained. A significant improvement in specific fuel consumption ("SFC") is expected as well.

The foregoing has described a heat exchanger for a gas turbine engine and a method for its operation. While the present disclosure has been described with respect to a limited number of embodiments, those skilled in the art, having benefit of this disclosure, will appreciate that other embodiments may be devised which do not depart from the scope of the disclosure as described herein. While the present disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out the disclosure. It is, therefore, to be understood that the appended claims are intended to cover all such modifications and changes as fall within the true spirit of the disclosure.

Various aspects and embodiments of the present invention are defined by the following numbered clauses:
1. A heat exchanger apparatus comprising:
   at least one cooling channel formed within and about an engine booster lip or an engine annular fan casing and configured to receive a flow of a circulating working fluid; and
   at least one fluid port communicating with the at least one cooling channel and an exterior of the engine booster lip or the engine annular fan casing.
2. The heat exchanger apparatus of clause 1, wherein the at least one cooling channel is embedded within the booster lip and in thermal contact with a root of at least one fan outlet guide vane or fan outlet strut.
3. The heat exchanger apparatus of clause 1 or clause 2, wherein a plurality of cooling channels are embedded within and about the booster lip and wherein each of the plurality of cooling channels is in thermal contact with the root of at least one fan outlet guide vane or fan outlet strut.
4. The heat exchanger apparatus of any preceding clause, wherein the at least one cooling channel is configured about at least a portion of a circumference of the engine booster lip.
5. The heat exchanger apparatus of any preceding clause, wherein the at least one cooling channel is configured about a complete circumference of the engine booster lip.
6. The heat exchanger apparatus of any preceding clause, wherein the at least one cooling channel is embedded within and about the engine annular fan casing and in thermal contact with a thermal plate on an outer surface of the engine annular fan casing.
7. The heat exchanger apparatus of any preceding clause, wherein the thermal plate is flush mounted to the outer surface of the engine annular fan casing.
8. The heat exchanger apparatus of any preceding clause, wherein the thermal plate is integrally formed with the outer surface of the engine annular fan casing.
9. The heat exchanger apparatus of any preceding clause, wherein a plurality of cooling channels are embedded within and about the engine annular fan casing and wherein each of the plurality of cooling channels is in thermal contact with the thermal plate.
10. The heat exchanger apparatus of any preceding clause, wherein the at least one cooling channel is configured about at least a portion of a circumference of the engine annular fan casing.
11. The heat exchanger apparatus of any preceding clause, wherein the at least one cooling channel is configured about a complete circumference of the engine annular fan casing.
12. A heat exchanger apparatus comprising:
   a plurality of cooling channels integrally formed within and about at least a portion of a circumference of one of an engine booster lip or an engine nacelle and wherein each of the plurality of cooling channels is configured to receive a flow of circulating working fluid; and
   inlet and outlet ports communicating with the at least one cooling channel and an exterior of the engine booster lip or the engine nacelle.
13. The heat exchanger apparatus of any preceding clause, wherein the plurality of cooling channels comprises a plurality of channels oriented circumferentially about the one an engine booster lip or an engine nacelle.
14. The heat exchanger apparatus of any preceding clause, wherein each of the plurality of cooling channels is embedded within the booster lip and in thermal contact with a base of at least one fan outlet guide vane or fan outlet strut.
15. The heat exchanger apparatus of any preceding clause, wherein the plurality of cooling channels are configured about at least a portion of a circumference of the engine booster lip.
16. The heat exchanger apparatus of any preceding clause, wherein each of the plurality of cooling channels is embedded within and about at least a portion of a circumference of the engine nacelle and in thermal contact with a thermal plate on an outer surface of the engine nacelle.
17. The heat exchanger apparatus of any preceding clause wherein the thermal plate is one of mounted to the outer surface of the engine nacelle or integrally formed with the outer surface of the engine nacelle.
18. An engine comprising:
   a core engine; and
   a heat exchanger apparatus comprising:
      at least one cooling channel integrally formed within and about an engine booster lip or an engine annular fan casing and configured to receive a flow of a circulating working fluid; and
      at least one fluid port communicating with the at least one flush mounted cooling channel and an exterior of the engine booster lip or the engine annular fan casing,
      wherein the at least one cooling channel is configured to provide an increase in the heat transfer coefficient of the heat exchanger apparatus while minimizing aerodynamic losses and specific fuel consumption (SFC).
19. The engine of any preceding clause, wherein the at least one cooling channel is configured about at least a portion of a circumference of the engine booster lip.
20. The engine of any preceding clause, wherein at least one cooling channel is embedded within and about the engine annular fan casing and in thermal contact with a thermal plate on an outer surface of the engine annular fan casing.

## Claims

1. A heat exchanger apparatus (54, 82) comprising:
at least one cooling channel (76, 84) formed within and about an engine booster lip (74) or an engine annular fan casing (51) and configured to receive a flow of a circulating working fluid; and
at least one fluid port (90) communicating with the at least one cooling channel (76, 84) and an exterior of the engine booster lip (74) or the engine annular fan casing (51).

2. The heat exchanger apparatus (54) of Claim 1, wherein the at least one cooling channel (76) is embedded within the booster lip (74) and in thermal contact with a root (68) of at least one fan outlet guide vane (29) or fan outlet strut (28).

3. The heat exchanger apparatus (54) of Claim 2, wherein a plurality of cooling channels (76) are embedded within and about the booster lip (74) and wherein each of the plurality of cooling channels (76) is in thermal contact with the root (68) of at least one fan outlet guide vane (29) or fan outlet strut (28).

4. The heat exchanger apparatus (54) of any preceding Claim, wherein the at least one cooling channel (76) is configured about at least a portion of a circumference of the engine booster lip (74).

5. The heat exchanger apparatus (54) of Claim 4, wherein the at least one cooling channel (76) is configured about a complete circumference of the engine booster lip (74).

6. The heat exchanger apparatus (82) of any preceding Claim, wherein the at least one cooling channel (84) is embedded within and about the engine annular fan casing (51) and in thermal contact with a thermal plate (86) on an outer surface of the engine annular fan casing (51).

7. The heat exchanger apparatus (82) of Claim 6, wherein a plurality of cooling channels (84) are embedded within and about the engine annular fan casing (51) and wherein each of the plurality of cooling channels (84) is in thermal contact with the thermal plate (86).

8. An engine (10) according to any of the preceding claims, wherein the at least one cooling channel (76, 84) is configured to provide an increase in the heat transfer coefficient of the heat exchanger (54, 82) while minimizing aerodynamic losses and specific fuel consumption (SFC).

9. The engine (10) of Claim 8, wherein the at least one cooling channel (76, 84) is configured about at least a portion of a circumference of the engine booster lip (74).

10. The engine (10) of either of Claim 8 or 9, wherein at least one cooling channel (76, 84) is embedded within and about the engine annular fan casing (51) and in thermal contact with a thermal plate (86) on an outer surface of the engine annular fan casing (51).
